# EUROPEAN PATENT APPLICATION

(11) **EP 4 837 879 A1**
(43) Date of publication of application: **11.11.2026**
(21) Application number: 25174706.9
(22) Date of filing: 07.05.2025
(51) Int. Cl.: C01B 3/00, B29C 48/00, B29C 48/03

(54) **METHOD FOR THE FABRICATION OF METAL HYDRIDE AND POLYMER COMPOSITES FOR HYDROGEN STORAGE**

(71) Applicant: Helmholtz-Zentrum hereon GmbH, 21502 Geesthacht (DE)
(72) Inventor: Georgopanos, Prokopios, 21502 Geesthacht (DE); Yang, Fan, 21502 Geesthacht (DE); Pistidda, Claudio, 21502 Geesthacht (DE); Shang, Yuanyuan, 21502 Geesthacht (DE)
(74) Representative: Uexküll & Stolberg

(57) **Abstract**

The present disclosure therefore a method for the manufacture of hydride-forming metal and polymer composites which are useful for storing hydrogen, which can easily be scaled up to an industrial level, is less costly and which provides hydride-forming metal and polymer composites with high hydrogen storage capacity and excellent stability of hydrogen adsorption and desorption over several adsorption and desorption cycles. The hydride forming material may be formed as a film, a solid fibre, a hollow fibre, or a filament.

## Description

### FIELD OF INVENTION

The present invention relates to method for fabricating a composite material for hydrogen storage based on metal hydrides. Such hydrogen storage systems based on metal hydrides may be applicable as a fuel source for a fuel cell.

### BACKGROUND OF INVENTION

Hydrogen is used in numerous industrial fields, for example as fuel in fuel cells or heat engines, as a reagent, for example for hydrogenation reactions, or as a source for storing energy, for example in batteries.

The discussion around future ecologically and economically promising energy economy has for some years been increasingly concentrated on efficient solutions also for generating energy. The developments are taking place in various technical sectors, for example in the field of industrial or domestic combined heat and power or in the automotive sector, in each case with the aim of obtaining an increase in efficiency of the overall process.

In the field of power generation, the potential of fuel cell technology has been recognized for some years and efforts are being made to obtain and use power and heat therefrom effectively. Fuel cells are galvanic cells which convert the chemical reaction energy of a continuously supplied fuel and an oxidant with simultaneous generation of heat into electrical energy. Often hydrogen is used as a fuel and oxygen as an oxidizing agent.

Hydrogen storage is a key enabling technology for the development of a hydrogen and fuel cell based economy. Hydrogen has the highest energy density per unit mass of any fuel; however, its low volumetric density at ambient temperature and pressures correspondingly results in a rather low energy density per unit volume. The most common hydrogen storage still consists of compressing the hydrogen gas at a pressure between about 35 MPa and 75 MPa which is connected with many disadvantages. The tanks are costly and their structure was found to age poorly. In order to achieve reasonable volumetric energy densities, hydrogen must be compressed to high pressures, typically 350 or even 700 bars, or cooled down to 20 K for liquefaction and cryogenic storage. Both, pressurization or liquefaction require much energy, reducing overall efficiency. Moreover, improvements in that technology are marginal due to the inherent limitation of the compressed hydrogen density. Cryogenic tanks for storing liquefied hydrogen at very low temperature are costly as they must be well insulated.

**In** recent years, hydrogen storage in the form of metal hydride has been investigated as an advantageous alternative, allowing for safer storage conditions and limited energy expenditure. Hydride storage systems, in particular hydride-forming metals (HFM), have proved to be particularly suitable for storing the fuel. Solid state hydrogen storage, e.g. via MgH₂, gives very good performances in terms of volumetric density. Metal hydride storage systems function at very low operating pressures. This makes the storage system safe and compact. Storing fuels, such as hydrogen, in hydride-forming metals allows a storage which is virtually loss-free over a long period of time without additional energy expenditure, as the gas is chemically bound. For safety as well, metal hydride storage systems are more suitable than compressed gas or liquid hydrogen storage systems, as the hydrogen cannot escape explosively.

Several hydride-forming metals and reactive composites have been intensively investigated as potential hydrogen storage materials for mobile and stationary applications during the last decades. Metal hydride materials research focuses on improving both the volumetric and gravimetric capacities, hydrogen absorption/desorption kinetics, and reaction thermodynamics of potential material candidates. Furthermore, long-term cycling effects have to be taken into account for the development of hydrogen-based technologies. Transition metal based additives have been used to improve the kinetics of hydrogen absorption/desorption, as e.g. disclosed in W. Oelerich, T. Klassen, R. Bormann "Metal oxides as catalysts for improved hydrogen sorption in nanocrystalline Mg-based materials", Journal of Alloys and Compounds, Vol. 135, 2001, pages 237-242.

Other approaches in improving both the hydrogen absorption/desorption kinetics and reaction thermodynamics of metal hydrides focus on thermal management of the heat transfer during desorption and absorption of hydrogen. One of the reasons for this is that the dehydrogenation, i.e. the release of hydrogen from the hydride, is an endothermic reaction, where heat is needed, and the hydrogenation, i.e. the absorption of hydrogen in the hydride storage, is an exothermic reaction, where heat is created. **In** some reactions, such as in case of magnesium hydride (ΔH ~ -75 kJ/mol), a considerable effort in thermal management needs to be exerted so that desorption/absorption reactions take place at interesting reaction rates.

Storing hydrogen in hydride-forming metals (HFM) is an approach that has been extensively studied in the last decades. Recently, the addition of polymers has been explored to improve the performance of some HFM. Polymers are a versatile class of materials that present a wide range of properties, from very stiff and brittle to highly deformable materials, depending on their physical-chemical characteristics. Air resistance, volumetric stability and processability are some of the HFM properties that could be improved by incorporating a polymer phase, as e.g. disclosed in G. Rodrigues de Almeida Neto, F. H. Matheus, C. A. Gongalves Beatrice, D. L. Leiva, L. A. Pessan, "Fundamentals and recent advances in polymer composites with hydride-forming metals for hydrogen storage applications", International Journal of Hydrogen Energy, Vol. 47, 2022, pages 34139-34164.

C. Abetz, P. Georgopanos, C. Pistidda, T. Klassen, V. Abetz "Reactive Hydride Composite Confined in a Polymer Matrix: New Insights into the Desorption and Absorption of Hydrogen in a Storage Material with High Cycling Stability", Advanced Materials Technologies, Vol. 7, 2022, pages 1-10 disclose the addition of polymers such as polymethylpentene to improve the performance of ball-milled HFM. These polymers are semicrystalline with low density, high hydrolysis and chemical resistance, and are also processable by solvent-based techniques. These methods have a limit on the amount that can be produced and the composite materials of hydride-forming metals and polymers have to be made under protective gas conditions of gas, making the entire process complicated and costly.

The present disclosure therefore provides a method for the manufacture of hydride-forming metal and polymer composites which are useful for storing hydrogen, which can easily be scaled up to an industrial level, is less costly and which provides hydride-forming metal and polymer composites with high hydrogen storage capacity and excellent stability of hydrogen adsorption and desorption over several adsorption and desorption cycles.

### SUMMARY OF INVENTION

The object is solved with a method as described in claim 1. Preferred embodiments are described in the appending claims.

According to one aspect, the invention provides a method for the manufacture of hydride-forming metal and polymer composites which are useful for storing hydrogen comprising: providing a melt mixing device, introducing a powder, a granulate or pellets of a polymer and particles of a material capable of adsorbing and desorbing hydrogen into the melt mixing device, melt mixing the polymer and a material capable of adsorbing and desorbing hydrogen in the melt mixing device to produce a composite material of polymer and material capable of adsorbing and desorbing hydrogen, transferring the composite material into a melt extruder, and extruding the composite material to form films, fibres, such as solid fibres or hollow fibres, or filaments of the composite material.

It has been found that the method according to the invention provides several unexpected advantages over the ball-milling method conveniently used to produce hydrogen-storage materials. First, the method can more easily be scaled up to an industrial level, it also provides cleaner materials, as it avoids that scrap from the ball material is introduced into the hydrogen storage material, and as it avoids of local heating due to high shear forces of ball material touching each other which might partially decompose the polymer material. As a result, hydrogen storage material of higher purity is obtained.

According to an embodiment of the invention, the melt mixing device is an extruder, preferably a twin screw extruder. According to another embodiment of the invention the, after melt mixing, the composite material of polymer and material capable of adsorbing and desorbing hydrogen is transferred to another extruder, preferably a single screw extruder from which the composite material is extruded to form fibres or filaments of the composite material. While melt mixing and/or extruding may be carried out under protective gas conditions, this is not necessary. Hence, according to still another embodiment of the invention melt mixing and/or extruding are carried out under ambient air conditions.

According to another embodiment of the invention, the polymer is a polyolefin, such as a poly-alpha-olefin, e.g. a polyethylene polymer, a polypropylene polymer, a pulybutene-1 polymer, a polymethylpentene polymer or any other polyolefin polymer. The polyolefin polymer may be a homopolymer of copolymer. Polyethylene homopolymers or polyethylene copolymers, especially with 1-hexene or 1-octene, polypropylene homopolymers or copolymer, and polymethylpentene homopolymers are particularly preferred. It has been found by the present inventors that polyolefins have the advantage over other polymers that they are highly hydrogen-permeable allowing fast adsorption and desorption of hydrogen by the material capable of adsorbing and desorbing hydrogen, yet having reduced permeability of oxygen and water, thereby protecting the material capable of adsorbing and desorbing hydrogen from degradation.

Preferably, the melt mixing is carried out at temperatures above the melting point of the polymer, preferably ranging between about 200°C and about 300°C, more preferably between about 220°C and about 280°C, still more preferably between about 250°C and about 280°C. According to another preferred embodiment, extruding of the composite material must not be carried out at temperatures above the melting point of the polymer, but is preferably carried out at temperatures above the softening point of the polymer, more preferably below the melting point of the polymer, such as at temperatures ranging between about 200°C and about 300°C, more preferably between about 220°C and about 280°C, still more preferably between about 250°C and about 280°C. Whereas, extrusion of films, solid fibres, or filaments of the composite material is typically carried out at temperatures similar or slightly below the temperatures of melt mixing, the extrusion of hollow fibres is typically carried out at temperatures at the lower end of the range, e.g. at temperatures ranging from 220°C to 250°C.

**In** still another embodiment, prior to introducing into the melt mixing device, the material capable of adsorbing and desorbing hydrogen may be milled, preferably in a ball mill, to a particle size ranging from 50 µm to 200 µm as determined by SEM analysis.

The nature of the material capable of adsorbing and desorbing hydrogen is not particularly limited. According to a preferred embodiment, the material capable of adsorbing and desorbing hydrogen is selected from hydride-forming metals (HFM). Exemplary hydride-forming metals include Mg, and alloys such as Hydralloy C5 or LaNi alloys such as LaNi5.

It is also preferred that no further adjuvants are added to the mixture while introducing introducing a powder, a granulate or pellets of a polymer and particles of a material capable of adsorbing and desorbing hydrogen into the melt mixing device. Accordingly, according to another embodiment, a mixture consisting essentially of a powder, a granulate or pellets of a polymer, and of particles of a material capable of adsorbing and desorbing hydrogen is introduced into the melt mixing device prior to melt mixing the polymer and a material capable of adsorbing and desorbing hydrogen in the melt mixing device. **In** another embodiment, only the composite material obtained from melt mixing the polymer and a material capable of adsorbing and desorbing hydrogen in the melt mixing device are transferred in the absence any other adjuvants into the melt extruder prior to extruding the composite material to form films, fibres, such as solid fibres or hollow fibres, or filaments of the composite material.

The content of the of the material capable of adsorbing and desorbing hydrogen within the composite material of polymer and material capable of adsorbing and desorbing hydrogen preferably ranges from 10 wt.% to 75 wt.%, preferably from 50 wt.% to 70 wt.%, such as from 65 wt.% to 68 wt.%.

The invention is further described with respect to the appending examples and figures, which are provided for illustration only and shall not be limiting, wherein
Fig. 1a is a SEM cross section image of an extruded filament consisting of polymethylpentene (TPX^{®} MX004) with 68 wt.% Hydralloy C5;
Fig. 1b is a SEM cross section image of an extruded filament consisting of polymethylpentene (TPX^{®} MX004) with 68 wt.% LaNi5;
Fig. 2a is a graph representing hydrogenation and dehydrogenation experiments on the extruded filament consisting of polymethylpentene (TPX^{®} MX004) with 68 wt.% Hydralloy C5; and
Fig. 2b is a graph representing hydrogenation and dehydrogenation experiments on the extruded filament consisting of polymethylpentene (TPX^{®} MX004) with 68 wt.% LaNi5.

### EXAMPLE

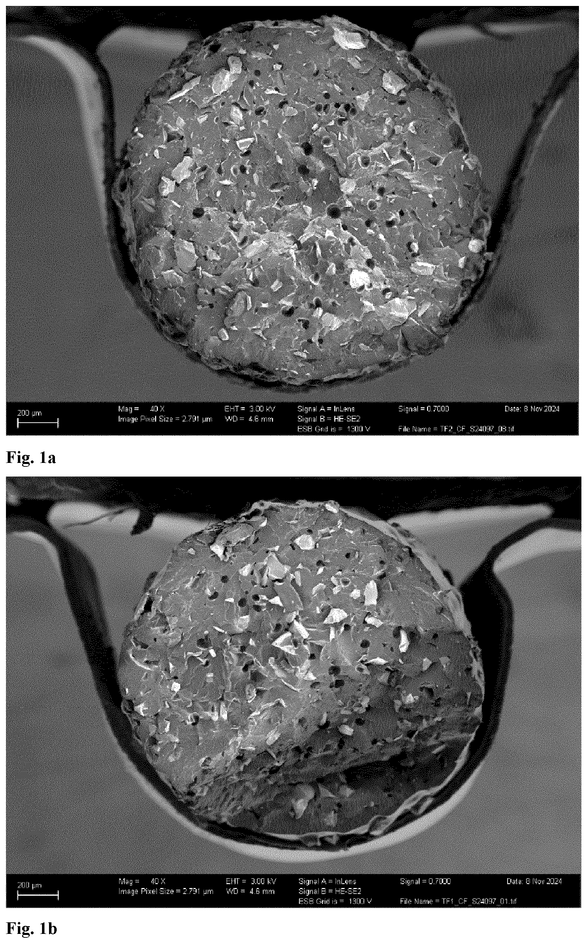

A certain amount of a granulate of polymethylpentene polymer, available under the trade name Mitsui TPX^{®} MX004, is introduced into a twin screw extruder and mixed therein at ambient air conditions - i.e. in the absence of a protective gas - with (a) ball-milled particles of Hydralloy C5 or (b) ball-milled particles of LaNi5, respectively, at a temperature ranging from 220°C at the extruder feed to 270°C at the extruder outlet, to yield a mixture comprising 68 wt.% Hydralloy C5, or 68 wt.% LaNi5, respectively. The mixture, after cooling, is transferred to a single-screw extruder and extruded under ambient air conditions - i.e. in the absence of a protective gas - into cylindrical filaments. The hydrogen storage composite produced is flexible and contains about 68 wt.% particle loading, based on the total weight of the mixture, capable of sustainably storing hydrogen. Figure 1a shows a SEM cross section image of an extruded filament consisting of polymethylpentene (TPX^{®} MX004) with 68 wt.% Hydralloy C5 and Figure 1b shows a SEM cross section image of an extruded filament consisting of polymethylpentene (TPX^{®} MX004) with 68 wt.% LaNi5. Figures 1a and 1b show that the material capable of adsorbing and desorbing hydrogen, i.e. Hydralloy C5 in Fig. 1a and LaNi5 in Fig. 1b is homogeneousl dispersered throughout the polymethylpentene which forms a matrix material.

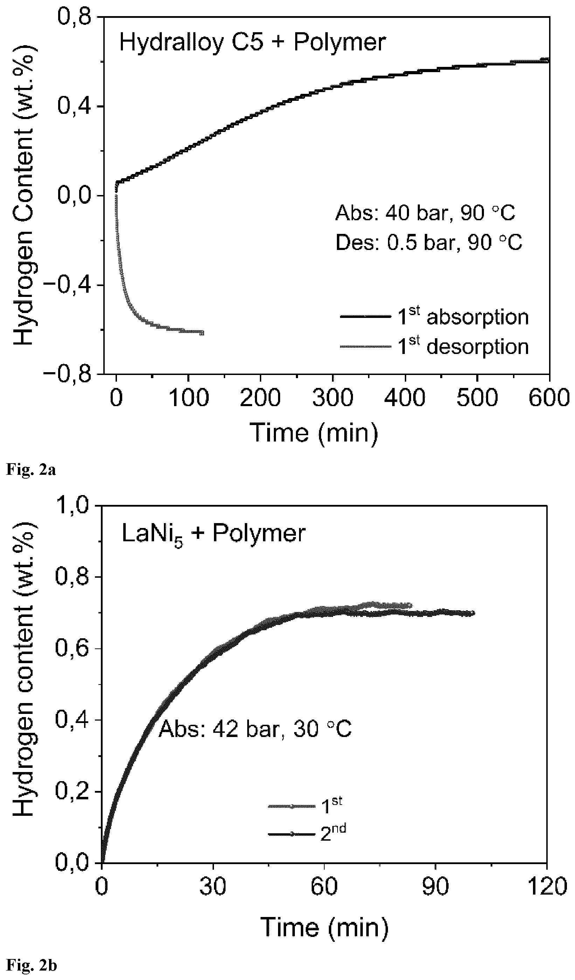

The fibre filaments were then transferred into a Sievert device for measuring the gravimetric storage of hydrogen throughout two adsorption and desorption cycles, respectively. Figure 2a is a graph representing the hydrogenation and dehydrogenation experiments on the extruded filament consisting of polymethylpentene (TPX^{®} MX004) with 68 wt.% Hydralloy C5 and Figure 2b is a graph representing the hydrogenation and dehydrogenation experiments on the extruded filament consisting of polymethylpentene (TPX^{®} MX004) with 68 wt.% LaNi5. The experiments show that the filaments are stable in air and lead to hydrogen storage materials that maintain their storage capacity over several adsorption and desorption cycles.

So far, only laboratory techniques and hot pressing methods have been used to produce composites of polymer and material capable of adsorbing and desorbing hydrogen. The present invention demonstrates that it is possible to use the extrusion method for continuous production in order to provide a scaled-up manufacturing process directly for hydrogen composite production without the need of applying protective gas technology.

## Claims

1. A method for the manufacture of hydride-forming metal and polymer composites which are useful for storing hydrogen comprising:
providing a melt mixing device,
introducing a powder, a granulate or pellets of a polymer and particles of a material capable of adsorbing and desorbing hydrogen into the melt mixing device,
melt mixing the polymer and a material capable of adsorbing and desorbing hydrogen in the melt mixing device to produce a composite material of polymer and material capable of adsorbing and desorbing hydrogen,
transferring the composite material into a melt extruder, and
extruding the composite material to form films, fibres, such as solid fibres or hollow fibres, or filaments of the composite material.

2. The method of claim 1, wherein the melt mixing device is an extruder, preferably a twin screw extruder.

3. The method of an one of claims 1 or 2, extrusion of the composite material of polymer and material capable of adsorbing and desorbing hydrogen is carried out in a single screw extruder.

4. The method of any one of claims 1 to 3, wherein melt mixing and/or extruding are carried out under ambient air conditions in the absence of a protective gas.

5. The method of any one of claims 1 to 4, wherein the polymer is a polyolefin, such as a poly-alpha-olefin, e.g. a polyethylene polymer, a polypropylene polymer, a pulybutene-1 polymer, a polymethylpentene polymer or any other polyolefin polymer.

6. The method of any one of claims 1 to 5, wherein melt mixing is carried out at temperatures above the melting point of the polymer, preferably ranging between about 200°C and about 300°C, more preferably between about 220°C and about 280°C, still more preferably between about 250°C and about 280°C.

7. The method of any one of claims 1 to 6, wherein extrusion of the of the composite material of polymer and material capable of adsorbing and desorbing hydrogen is carried out at temperatures above the softening point of the polymer, preferably below the melting point of the polymer.

8. The method of any one of claims 1 to 7, wherein, prior to introducing into the melt mixing device, the material capable of adsorbing and desorbing hydrogen is milled, preferably in a ball mill, to a particle size ranging from 50 µm to 200 µm as determined by SEM analysis.

9. The method of any one of claims 1 to 7, wherein the material capable of adsorbing and desorbing hydrogen is a hydride-forming metals, more preferably selected from Mg, Mg alloys, and LaNi alloys, such as LaNi5

10. The method of any one of claims 1 to 8, wherein the content of the of the material capable of adsorbing and desorbing hydrogen within the composite material of polymer and material capable of adsorbing and desorbing hydrogen preferably ranges from 10 wt.% to 75 wt.%, preferably from 50 wt.% to 70 wt.%, such as from 65 wt.% to 68 wt.%, based on the total weight of the composite material.

11. A composite material comprising a polymer and a material capable of adsorbing and desorbing hydrogen manufactured according to the method of any one of the previous claims, wherein the composite material is present in the form of a film, a solid fibre, a hollow fibre, or a filament.

12. The composite material of claim 11, wherein the composite material is flexible.
